# EUROPEAN PATENT SPECIFICATION

(11) **EP 1 593 717 B1**
(45) Date of publication and mention of the grant of the patent: **11.06.2008**
(21) Application number: 05252552.4
(22) Date of filing: 23.04.2005
(51) Int. Cl.: C09D 5/03

(54) **Raw mix powder compositions and methods of making the same**
ROHMIX-PULVERZUSAMMENSETZUNGEN UND VERFAHREN ZU DEREN HERSTELLUNG
COMPOSITIONS DE POUDRE MIXTE BRUTE ET LEURS PROCEDES DE FABRICATION

(30) Priority: 07.05.2004 US 569115 P
(43) Date of publication of application: 09.11.2005
(73) Proprietor: ROHM AND HAAS COMPANY, Philadelphia, Pennsylvania 19106-2399 (US)
(72) Inventor: Correll, Glenn D., Birdsboro, Pennsylvania 19508 (US); Horinka, Paul R., Blandon, PA 19510 (US); O'Neill, Julia C., Glenside, Pennsylvania 19038 (US); Zimmerman, Scott A., Homestead, Florida 33035 (US)
(74) Representative: Buckley, Guy Julian

(56) References cited:
- WO-A-95/28433
- WO-A-95/28435
- US-A- 5 207 954
- US-A- 5 898 064
- US-A1- 2001 020 060
- US-A1- 2003 113 445
- US-B1- 6 322 900
- US-B1- 6 360 974

## Description

### FIELD OF THE INVENTION

The present invention relates to encapsulated raw mix powder compositions comprising an encapsulated mixture of ingredients as unassociated discrete particles a method of making the same, and a method for making a powder coating on a substrate.

### BACKGROUND OF THE INVENTION

Powder coating films are formed by melting or flowing powder coating particles into a cohesive layer, followed by curing the components to form a continuous film.

To achieve a continuous film, powder coating compositions, also referred to as "coating powders", have been formulated by intimate mixing of the reactive ingredients of the powder coating via two routes before a powder coating composition can be applied to a substrate: melt-mixing, such as by extrusion; or via dispersion or dissolution in liquid or fluid media and spray drying or freeze drying (lyophilizing). Thus, the preparation of coating powders is complex, invariably embracing a large number of processes.

In the extrusion process, powder coating raw materials may optionally be coarsely milled, and then the individual components of the powder coating materials, including binders and functional constituents, such as crosslinking agents, pigments and typical powder coating additives, are pre-mixed or tumble blended with one another and the mixtures are extruded, or processed in a supercritical fluid medium. The extrudate is discharged and brought to solid form at room temperature, e.g. by cooling on a cooling belt. The solid extrudate is broken into chips and is then ground to a desired particle size and screened, after which the resultant powder coating material is weighed and packed. The composition of extruded coating powders cannot be corrected or changed in-process, but must be adjusted prior to extrusion or any other form of intimate mixing.

As an alternative to extrusion, coating powder manufacture requires dispersion or solution of a melt or reactant mixture into a liquid medium under shear to intimately mix ingredients, followed by spray drying and, if necessary, removal of residual solvent to create the powder. This process generally requires organic solvents or volatile organic compounds (VOCs) and, thus, unlike extrusion, fails to avoid the use of environmentally harmful chemicals in processing powder. Further, in the case of spray drying, solvent removal requires a high input of energy.

Current coating powder manufacturing processes are cumbersome and require a large capital investment in equipment, i.e., for extrusion: Premixers, extruders and cooling belts or high pressure mixers adapted for lyophilization or supercritical fluid processing, crushers, mills, sieving machines; for spray drying: Reactor vessels or mixing chambers, spray dryers, secondary drying means, such as a drying belt; and, for both methods: packaging machines. This equipment must be cleaned each time a different formulation, i.e. one of a different color, is manufactured, because a single blue powder coating particle in a yellow coating, for example, can be seen at first glance. Depending on the formulation, the equipment may have to be completely taken apart to accomplish a thorough cleaning. This cleaning operation may take from several hours up to several days, and can thus be very costly. In addition, one must discard all materials removed in cleaning as well as a proportion of the starting materials which have been processed before acceptable mixing conditions, i.e. temperature and pressure or proper spray conditions, have been obtained. For example, in the case of extrusion, up to about one-tenth of every batch of every coating powder made is discarded as waste, with larger proportions wasted in smaller batches. The amount of material required for start-up and lost through cleaning cannot be accurately estimated, so excess material must always be produced. Accordingly, for any extrusion batch to meet a request to provide a specified amount of powder composition, the initial premix has to include enough material to make significantly more than the requested amount of powder.

Extrusion processing provides no opportunity to adjust the composition of an intimate mix without repeated extrusion steps. For example, any discrepancy from acceptable tolerances in any custom formulation of a mixture of ingredients, e.g. desired color, will result in an extruded product that cannot be used by a customer. Where possible, the custom formulation will have to be adjusted so that the ratio of resin to non-resin solids is kept constant and then re-extruded. Some formulations, e.g. those that are highly heat sensitive, cannot be adjusted and re-extruded. In any case, any adjusted formulation must be re-extruded.

Another disadvantage of extrusion, as compared to liquid processing, lies in the fact that the incorporation of effect pigments based on platelet-shaped pigment particles, e.g. mica, into the powder coating materials frequently results in a change in pigment particle size and morphology. Colorations so obtained may be less attractive than the coatings produced with these effect pigments incorporated into wet coating materials, and lack the brightness and the typical deep-seated satin sheen. Aluminum effect pigments turn gray, and in the case of mica effect pigments the optical effects may no longer be observed at all.

U.S. 5,856,378, to Ring et al., discloses powder coating compositions comprising agglomerates of at least one solid, particulate film-forming component, which may be colored, and at least one different solid, particulate component, which may or may not be film-forming. Several different kinds of individual solid, particulate components may independently be made or provided, with or without extrusion. Accordingly, by mixing different solid, particulate components in various proportions and agglomerating them together, virtually any powder coating composition may be made using a simple batch mixer. However, the at least one film-forming component in Ring et al. must, in fact, be extruded and so the process thereby suffers from the same inflexibility, capital burden and waste issues attendant with extrusion.

In accordance with the present invention, the present inventors have unexpectedly discovered a way to make powder compositions useful in making powder coatings and toners without any extrusion, high-pressure fluid processing, or any spray drying or freeze drying, and without any of such expensive equipment or the problems attendant with the use of such equipment.

### SUMMARY OF THE INVENTION

The present invention, in its various aspects, is as set out in the accompanying claims. According to one aspect of the present invention, the encapsulated raw mix powder compositions comprise encapsulated mixtures of raw ingredients as unassociated discrete particles of a desired particle size (hereinafter "raw mixes"). The method of forming the raw mix consists essentially of intimately mixing the raw ingredients by milling to an average particle size of from 1 to 25 µm. The ingredients comprise randomly shaped primary particles each consisting of solids of one or more than one film-forming (co)polymers or resins, and particles of one or more than one solid additives chosen from melt flow aids, non-film-forming coloring agents, non-film-forming fillers, charge control agents, dry flow aids and mixtures thereof.

According to an embodiment of the present invention, the raw mix powder compositions are encapsulated in one or more than one film-forming (co)polymer encapsulants, thereby resulting in fluidizable powders having an average particle size of from 15 to 100 µm. Such raw mix compositions comprise a mixture of unassociated discrete particles of one or more than one (co)polymer or resin powders and particles of one or more than one solid additives chosen from melt flow aids, coloring agents, dry flow aids, charge control agents, fillers and mixtures thereof.

In another aspect of the present invention, methods for making encapsulated raw mix powder compositions consist essentially of providing one or more solid consisting of a solid film-forming (co)polymer or resin, optionally, combining the solid film-forming (co)polymer or resin with one or more solid additives chosen from one or more melt flow aids, one or more non-film forming coloring agents, and one or more non-film forming fillers, optionally, further combining the solid film-forming (co)polymer or resin and non-film-forming solid additive with one or more solid dry flow aids or charge control agents, and milling, preferably jet milling, the said combined solids to form a raw mix powder composition having an average particle size of 1 to 25 µm in diameter. Milling intimately mixes the solids to form the raw mix. In addition, to form encapsulated raw mix, the process further consists essentially of forming temporary granules by mixing the raw mix powder composition with one or more volatile nonsolvents, such as water, mixing the thus formed temporary granules into one or more fluid film-forming resin or (co)polymer encapsulants, and drying to form the encapsulated raw mix and remove the non-solvent.

The inventive methods enable rapid formulation of powder compositions made to-order without extrusion or spray or freeze drying, minimizing capital equipment expense and streamlining raw material inventory.

### DETAILED DESCRIPTION OF THE INVENTION

Mixtures of milled raw ingredient particles or "raw mixes", encapsulated raw mix compositions comprise air fluidizable materials suitable as a toner or powder coating. Such raw mixes can be made simply by weighing and measuring raw materials and milling, and because little or no waste is involved, even a small batch can be sized exactly as requested, i.e. exactly 5 kilograms per request. In a preferred method of making the raw mix, fluid energy jet-milling or jet milling of the raw materials with the assistance of a fluidizing gas can rapidly reduce the size of the raw mix particles to less than 10 µm without heating the raw mix. Natural cooling takes place during the rapid expansion of a compressed gas introduced to the jet mill, thereby, more than compensating for the frictional heating of powder during the milling process. By making the particles small enough, intimate mixing sufficient to make coating powders and toners can be achieved rapidly without extrusion, supercritical fluid processing or processing as a liquid that needs to be spray dried or freeze dried. In addition, it has unexpectedly been found that the raw mixes of the present invention can be applied using electrostatic spray equipment. Nevertheless, to aid in the use of electrostatic spray application equipment, it may be desirable to encapsulate or agglomerate the raw mix particles before application. Encapsulated raw mix or raw mix agglomerates have average particle sizes larger than 15 µm in diameter, and thus present lower risks of explosivity and adverse respirability.

All ranges recited are inclusive and combinable. For example, an average particle size of 1.3 µm or more, for example, 1.5 µm or more, which may be 4.5 µm or less, or 4.0 µm or less, will include ranges of 1.3 µm or more to 4.5 µm or less, 1.5 µm or more to 4.5 µm or less, 1.5 µm or more to 4.3 µm or less, and 1.3 µm or more to 4.3 µm or less.

Unless otherwise indicated, all temperature and pressure units are standard temperature and pressure (STP).

All phrases comprising parentheses denote either or both of the included parenthetical matter and its absence. For example, the phrase "(co)polymer" includes, in the alternative, polymer, copolymer and mixtures thereof.

As used herein, the phrases "agglomerate" and "granule" are used interchangeably, with the understanding that a granule will not break apart under the electrostatic and mechanical forces encountered in the application of either of coating powder or toner.

As used herein, the phrase "average particle size", refers to the median particle size of a distribution of particles as determined by laser light scattering using a Malvern Mastersizer® 2000, a product of Malvern Instruments Inc. of Southboro, MA, per manufacturer's recommended procedures. The median is defined as the size wherein 50 wt. % of the particles in the distribution are smaller than the median and 50 wt. %of the particles in the distribution are larger than the median. The symbol "d(0.5)" or "D50"designates the median. The median, by definition, is the 50^{th} percentile of the particle size distribution. Similarly, d(0.97) or D97 is the 97^{th} percentile of the particle size distribution, such that 97% of the particles in the distribution have a smaller diameter than that percentile.

As used herein, the phrase "coating powder" refers to a powder coating composition and the phrase "powder coating" refers to a coating formed from a powder coating composition.

As used herein, unless otherwise indicated, the phrase "copolymer" includes, independently, copolymers, terpolymers, block copolymers, segmented copolymers, graft copolymers, and any mixture or combination thereof.

As used herein, unless otherwise indicated, the phrase "film-forming polymer or resin" means one that is capable of melting or flowing at or above its melting or softening point to form a continuous film.

As used herein, unless otherwise indicated, the phrase "low temperature cure" or "low temperature curing" refers to (co)polymers and resins, curing agents or their mixtures that cure at temperatures at least 10°C, preferably at least 15°C above the T_{g} of the (co)polymer or resin in the raw mix and below 177°C, preferably, below 150°C, and more preferably below 125°C.

As used herein, unless otherwise indicated, the phrase "melt viscosity" refers to the melt viscosity of a polymer or resin, as measured in centipoises at 150°C using a high temperature I.C.I. Cone & Plate Viscometer in accordance with ASTM D 4287-00 (January, 2001), wherein the shim is 0.002, sample size ranges from 0.1 to 0.2 g and the reading in Poise (P) is multiplied by 2.5 when a 0-100 spindle is used.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight of a polymer as measured by gel permeation chromatography.

As used herein, the phrase "plurality" means two or more, and may refer to a large number, e.g. in the quadrillions, such as the number of solid particles in a batch of raw mix powder.

As used herein, the phrase "primary particle" refers to a particle of the one or more solid (co)polymer or resin ingredient(s) contained in a mixture of particles. A solid (co) polymer or resin generally has, but may not have, an average particle size that is equal to or larger than any other ingredients in a raw mix.

As used herein, the phrase "randomly shaped particles" refers to particles having no particular shape, although it may include particles of no particular shape mixed with particles having a regular shape, e.g. spherical, or it may include particles having rounded edges.

As used herein, the phrase "raw mix" refers to a milled mixture of solid raw ingredient particles.

As used herein, the phrase "solid" refers to any crystalline, amorphous or polyphasic material while at a temperature below its softening point, melting point or glass transition temperature (T_{g}) at standard pressure.

As used herein, the glass transition temperature (T_{g}) of any polymer may be calculated as described by Fox in Bull. Amer. Physics. Soc., 1, 3, page 123 (1956). The T_{g} can also be measured experimentally using differential scanning calorimetry (rate of heating 20°C per minute, T_{g} taken at the midpoint of the inflection or peak). Unless otherwise indicated, the stated T_{g} as used herein refers to the calculated T_{g}.

As used herein, the phrase "unassociated" means not stuck together or not stuck together sufficiently well as to be capable of withstanding the mechanical or electrostatic forces of either of coating powder or toner application without breaking apart.

As used herein, the phrase "wt.%" stands for weight percent.

The "raw mix" composition of the present invention comprises a mixture of unassociated and discrete particles of different ingredients which have been milled to a desired particle size. Further, the composition may comprise the raw mix encapsulated in a film-forming polymer. Still further, the composition may comprise an agglomerate of the raw mix.

Because the raw mix may be formed simply by milling one or more solid ingredients to a desired particle size, each of the particles forming the raw mix may "consist of" only a single solid ingredient, e.g. a (co)polymer or resin. As a result, the raw mix is actually a powder of one or more kinds of solid particles, preferably, a heterogeneous mixture of two or more kinds of solid particles. The incorporation of additional ingredients, such as colorants, fillers or curing agents, into a polymer or resin raw material requires intimate mixing, e.g. via extrusion or dispersion in liquid and spray drying, and would thus undo the advantage of the present invention. However, any raw materials or additives in liquid form should be converted to solids for use in the raw mix, and comprise mixtures made by absorption of the raw material onto a sold carrier. Particles of raw materials or additives converted into solids may comprise particulate mixtures, such as lakes; or liquid dyes, liquid resins, initiators or catalysts, absorbed via simple mixing in a medium or high intensity mixer onto a porous inert carrier, e.g. silica, wollastonite, diatomaceous earth or talc. Suitable mixers for incorporating liquid additives and solid carriers may include conical, double conical or horizontal mixers having integral spray nozzles for introduction of the liquid ingredient, such as those made by Mixaco, Greer, SC, preferably with one or more secondary mixing mechanism provided by screws, paddles or the like; or blade or planetary mixers with an access port for introduction of the liquid, such as those made by Plasmec, Lonate (Pozzolo), IT.

Raw mix average particle size (d(0.5)) may range as high as 25 µm, or as high as 20 µm, preferably as high as 15 µm, or more preferably as high as 10 µm. Raw mix average particle size (d(0.5)) may range as low as 1 µm, or as low as 3 µm, preferably, as low as 5 µm, or as low as 8 µm. While average particle size matters in the raw mix, particle shape does not because the product will be melted in use. However, spherical particles facilitate fluidization, so milling processes such as jet milling (as opposed to grinding) which produce particles with rounded edges are preferred. Likewise, processes such as fusion agglomeration to cause particle deformation and welding will produce round particles. Raw mixes having lower particle sizes provide a more homogeneous appearance in the final coating or print and higher particle sizes facilitate air fluidization of the raw mix. Thus, raw mixes having higher particle sizes can suitably be used to provide textured or multicomponent finishes in coatings, films and print. Raw mixes having very low particle sizes may provide intricate patterns, depending on the application process used. Thus, toners may comprise raw mixes having average particle sizes below 20 µm, preferably from 3 to 15 µm.

Encapsulated raw mixes are capsules of the loose raw mix which, if broken open, would spill out a raw mix powder. Such encapsulated raw mixes adopt the surface characteristics of the (co)polymer encapsulating the raw mix.

Agglomerates of raw mixes comprise the particles of the raw mixes glued together in a mass of associated raw mix particles.

Encapsulated raw mixes and agglomerates of raw mixes may have average particle sizes as large as any that can be air fluidized. Accordingly, the average particle size (d(0.5)) of encapsulated raw mixes and agglomerates of raw mixes may range as high as 200 µm, or as high as 60 µm, or, preferably, as high as 50 µm, the higher average particle sizes providing textured finishes and cured products. If desired, average particle size (d(0.5)) of encapsulated raw mixes and agglomerates of raw mixes may range as low as 15 µm, or, preferably, as low as 20 µm, or as low as 30 µm.

The method of milling without extrusion enables rapid formation of stable powders of highly heat sensitive materials, such as crystalline epoxy resins, semi-crystalline polyesters, and thermoplastic (co)polymers, and, further, enables the mixing of ingredients that are co-reactive at temperatures as low as 40°C into a single component or one-pack mix instead of a two component mix packaged in separate containers. Accordingly, the present invention provides a wider variety of powder compositions than can be processed by extrusion.

Film forming (co)polymer or resin particles may consist of any thermoplastic, ultraviolet (UV) curable, or thermosetting resin or (co)polymer having a T_{g} of 40°C or higher, preferably 45°C or higher, and, further, having a T_{g} below the curing temperature of the coating powder or powder toner. Suitable amounts of the one or more than one (co)polymers or resins ranges from 39.99 to 99.99 wt. %, based on the total weight of the raw mix.

The (co)polymer or resin may consist of particles of one or more than one thermosetting or UV curable polyester resins, unsaturated polyesters, epoxy resins, fluorine-containing resins, acrylic resins, urethanes, silicone resins and hybrids of these resins. "Hybrids" of (co)polymers or resins may refer to adducts, grafts or block copolymers and compatible or compatibilized blends of such (co)polymers or resins. Suitable functional groups in thermosetting resins may include hydroxyl, carboxyl, epoxy, blocked isocyanate groups and combinations thereof.

Polyester resins may include one or more than one amorphous carboxylic acid functional or hydroxyl functional polyester resin. Suitable polyester resins may be linear or branched, and formed by the polymerization of polyols and poly-functional carboxylic acids. Suitably, polyester resin chains may be relatively short, such that acid functional polyesters should have acid numbers from 15 to 100, for example from 25 to 90, and hydroxyl functional polyester resins may have hydroxyl numbers of from 2 to 20, for example from 2 to 12, or from 2 to 10. Polyesters may comprise the reaction product of polyols, e.g. C₁ to C₁₂ linear or branched diols, e.g. neopentyl glycol, with an excess of pimelic acid, azelaic acid, succinic acid, glutaric acid, like aliphatic polycarboxylic acids and their anhydrides; hexahydrophthalic acid, hexahydroisophthalic acid, methylhexahydrophthalic acid and like alicyclic polycarboxylic acids and their anhydrides; higher T_{g} polyesters made by including terephthalic acid, isophthalic acid, phthalic acid, trimellitic acid, pyromellitic acid and like aromatic polycarboxylic acids and their anhydrides.

Preferably, coating or film flow and smoothness of polyester, epoxy, acrylic or urethane compositions may be improved by including particles of one or more than one at least partially crystalline polyester resin curing agent in the compositions.

Preferred weatherable polyesters may comprise the reaction product of from 15 to 90 mole % of isophthalic acid, from 5 to 30 mole %, for example from 15 to 30 mole %, of 1,4-cyclohexanedicarboxylic acid, with the remainder of acid, for example 65 mole % or less, of terephthalic acid, based upon the total number of moles of acid present, and from 50 to 100 mole %, such as 70 to 100 mole %, of branched polyols having from 5 to 11 carbon atoms, such as neopentyl glycol, based upon the total number of moles of polyols present, wherein at least 8 mole % of all reactants have a functionality of three or higher, such as trimethylolpropane, based upon the total number of moles of both acid and polyol present.

Suitable UV curable unsaturated polyesters may have degrees of unsaturation of from 2 to 20 weight percent (wt.%), for example from 4 to 10 wt. %, based on the total weight of the unsaturated polyester resin. Such resins may be formed from di- and/or polyfunctional carboxylic acids (or their anhydrides) and di- and/or polyhydric alcohols. The unsaturation is typically supplied by the carboxylic acid, such as maleic or fumaric acid, although it is possible to supply it through the alcohol or polyol, i.e. allyl alcohol. Preferably, the unsaturated polyesters include active hydrogen residues to promote surface cure. Active hydrogens include allylic, benzylic, cyclohexyl or tertiary alkyl hydrogens from polyol reactants chosen from trimethylolpropane monoallyl ether, vinyl cyclohexanediol, cyclohexane dimethanol, cyclohexane diol and from carboxylic acids chosen from malonic acid, nadic acid, dimer acid and tetrahydrophthalic anhydride.

Suitable epoxy resins include polyepoxides, such as homopolymers and copolymers of glycidyl (meth)acrylate (GMA), e.g. with alkyl (meth)acrylates, condensed glycidyl ethers of (oligo)bisphenols, made by reacting bisphenol with halohydrins, polyglycidyl ethers and esters. Preferably, the epoxy resins consist of particles of one or more glycidyl ethers of (oligo)bisphenol A or F having melt viscosity at 150°C of from 300 to 3500 centipoises (cps).

Thermosetting fluorine containing resin particles may consist of one or more copolymers of fluoroolefins with (per)flouro(alkyl) vinyl ethers, e.g. copolymers of tetrafluoroethylene, hexafluoropropylene and from 0.01 to 5 wt. % perfluoro (vinyl ether), based on the total weight of the reactants in the copolymer.

Acrylic thermosetting resins may comprise GMA, hydroxyl, isocyanate, amine or carboxyl functional copolymers of C₁ to C₈ alkyl (meth)acrylates copolymerized with from 1 to 10 wt. %, based on the weight of all comonomers, of (meth)acrylic acid, isocyanate alkyl (meth)acrylates, aminoalkyl (meth)acrylates or hydroxy alkyl (meth)acrylates. Particles may consist of one or more UV curable acrylic resins such as acrylate terminated urethane, polyester and epoxy oligomers and polymers.

Suitable thermosetting silicone resins may comprise any linear or branched silicone resin having organic substituents, i.e. C₂ through C₂₄ alkyl or (alkyl)aryl monovalent hydrocarbons, as well as curable alkoxy, (alkyl)aryloxy, hydroxyl or silanol groups which have a viscosity of from 500 and 10,000 cps at 150°C, for example 1000 to 5000 cps. Useful silicone resins may have a degree of organic substitution of 1.5 or less, suitably from 1 to 1.5 to provide heat stable coatings. Further, such resins should have a silanol functionality (Si--OH) or a hydroxyl functionality. The silicone resin of the present invention may have a condensable silanol or hydroxyl content of from 1.5 to 7 wt. %, for example from 2 to 5 wt. %. Degree of substitution is defined as the average number of substituent organic groups per silicon atom and is the summation of the mole percent multiplied by the number of substituents for each ingredient. Preferred monovalent hydrocarbons include phenyl, methyl, and mixtures thereof.

Thermoplastic (co)polymer or resins may consist of particles of one or more(co)polymer or resin chosen from fluoroolefins, such as polyvinylidene fluoride (PVDF), ethylene/tetrafluoroethylene copolymer, poly-phenylene sulphide, polyamides, such as NYLON™, polyolefins and linear polyesters, such as poly (butylene adipate), poly(ethylene terephthalate) and copolyesters or block copolyesters thereof. The one or more suitable film-forming (co)polymers or resins may consist of mixtures of particles each consisting of one or more thermoplastic (co)polymers or resins. Preferably, thermoplastic (co)polymer or resin particles consist of blends of PVDF and acrylate or mixtures of PVDF particles and acrylate particles.

Suitable curing agents may include one or more amines or amine resins, polycarboxylic acids and their epoxy resin adducts, carboxylic anhydrides and their epoxy resin adducts, ultraviolet (UV) curable polymers or resins, blocked isocyanate compounds, polyepoxides, β-hydroxyalkyl alkylamides, wrinkle forming curing agents, and polyol compounds. Any liquid curing agent may be adsorbed onto one or more submicron sized carrier such as fumed silica, wollastonite, diatomaceous earth or talc to form powder particles for use in the raw mix. The one or more curing agents may be used in amounts such that the stoichiometric relationship between the curing agent(s) and all of the (co)polymer(s) or resin(s) cured thereby ranges from 0.7 to 1.3.

Amines and amine resins may be used to cure epoxy resins and polyesters. Examples include dicyandiamide, imidazoles, epoxy-adducts of imidazoles, substituted imidazoles, such as 2-methyl or 2-phenyl imidazoles, 2-heptadecylimidazole, and epoxy-adducts of primary, secondary and/or tertiary aliphatic amines, hexamethoxymelamine resin, and hexaethoxymelamine resin. Preferred amine curing agents include low temperature curing primary monoamines, disecondary diamines, and the oligomers and the epoxy, polycarboxylic acid and/or anhydride adducts thereof. Examples of preferred amine curing agents include N-butylamine, diethylamine, stearyldimethyl amine, tri-n-hexylamine, epoxy-adducts of primary, secondary and/or tertiary aliphatic amines and epoxy-adducts of imidazoles.

Polycarboxylic acids, anhydrides and their epoxy resin adducts may be used to cure epoxy, polyester and hydroxyl, carboxyl or isocyanate functional acrylic resins or (co)polymers. Examples of polycarboxylic acids and their corresponding anhydrides include at least partially crystalline polyesters and polycarboxylic acids having an acid number of from 40 to 500, such as adipic acid, sebacic acid, suberic acid, and dodecanedioic acid, the anhydrides thereof, as well as acid functional polyesters made by reacting an excess of such polycarboxylic acids with polyols, e.g. C₁ to C₈ diols or glycols. Preferred curing agents comprise epoxy resin adducts of polycarboxylic acids or anhydrides formed by reacting the acid or anhydride with aromatic epoxy resins, such as glycidyl ethers of (oligo)bisphenols, e.g. bisphenol A or F, polyglycidyl ethers or esters containing phenyl or benzyl residues, epoxy cresol novolaks and epoxy phenol novolaks.

Suitable UV curable curing agents may comprise particles of acrylic terminated polyols, polyurethanes or polyesters, and particles of divinylethers (DVE) of glycols and polyols, e.g. poly(ethyleneglycol) or (PEG), such as (PEG200-DVE), and polyethyleneglycol-520 methyl vinylether.

Blocked isocyanate curing agents may be used with one or more hydroxy-functional polyester or acrylic resins. Examples of blocked isocyanate compounds include those prepared by blocking one or more aliphatic, alicyclic or aromatic polyisocyanates with one or more blocking agents such as phenol, one or more (di)carboxylic acids, caprolactam or alcohol. The aliphatic, alicyclic or aromatic polyisocyanate may be isophorone diisocyanate, hexamethylene diisocyanate, xylylene diisocyanate, tolylene diisocyanate, hydrogenated xylylene diisocyanate, hydrogenated tolylene diisocyanate or the like.

Examples of polyepoxides include triglycidyl isocyanurate (TGIC), or condensed glycidyl ethers of (oligo)bisphenols, preferably of bisphenol A or F, made by reacting bisphenol with halohydrins. Preferably, powders comprise polyepoxide curing agent particle mixed with particles of one or more polyester.

Examples of β-hydroxyalkyl alkylamides include β-hydroxyethyl propylamide. β-hydroxyalkyl alkylamides are preferred as environmentally friendly curing agents for carboxy-functional polyesters.

Wrinkle forming curing agents for epoxy resins may comprise methylene disalicylic acid (MDSA) and the alkyl, (alkyl)aryl, and arylalkylene substituted forms thereof, preferably in admixture with a Lewis acid, such as BF₃:amine complexes to give low temperature curing powders.

Examples of polyols include trimethylolpropane, sorbitol and tris(2-hydroxyethyl)isocyanurate.

To facilitate formation of continuous films or coatings, the raw mixes may preferably comprise particles of one or more melt flow aids. Suitable melt flow aids should be selected for compatibility with the one or more (co)polymers or resins and may include acrylic polymers based on butyl acrylate, such as Resiflow P-67™ acrylic oligomer and Clearflow™ Z-340 from Estron Chemical, Inc. (Calvert City, Ky.); Modaflow™ 2000 acrylic copolymer and other poly(alkylacrylate) products from Monsanto (St. Louis, Mo.); Modarez™ MNP silica/silicate mixture (for silicone resins) and Modarez™ 23-173-60 silicone acrylate on silica, from Synthron, Inc. (Morgantown, N.C.) ; and BYK® Powder Flow 3 polyacrylate/polysiloxane and BYK® 361 acrylate copolymer, from BYK Chemie (Wallingford, Conn.); polyacrylic acid-n-butylene, available as ACRONAL™ from BASF, MODAREZ™ polyacrylate polymers from Protex France, and the SURFYNOL™ acetylenic diols, from Air Products and Chemicals, Inc. (Allentown, PA). Suitable total amounts of the melt flow aids range from 0.1 wt. % or more of the raw mix, preferably 0.5 wt. % or more, and can range as high as 10 wt. % of the raw mix, or up to 5 wt. %. The raw mix may be used without any melt flow aid.

Non-film-forming additives may be chosen from non-film-forming coloring agents, fillers or extenders, gloss-reducing agents, texturing agents, rubbery core-shell copolymer flexibilizers, friction-reducing additives, strengthening agents, such as polymeric nanoparticles (PNPs), microcapsules; catalysts; biological material, intumescent additives, e.g. ammonium polyphosphate and an oxygen containing thermoplastic resin; thermochromic pigments, and other heat-sensitive materials. Preferably, the non-film forming additives comprise colorants and fillers to provide coatings having a desired color or mechanical and physical properties, such as tensile strength and heat resistance.

In one preferred embodiment, rapid formulation of powder compositions matching a desired or target color results from use as a powder of raw mixes comprising particles having an average particle size of 15 µm or less and containing particles of at least two or more, or three or more different coloring agents. The small particle size of the raw mix enables the formation of homogeneous, continuous films, coatings or print.

Suitable coloring agents may include inorganic and organic pigments, dyes and their combinations. If any coloring agent is in liquid form at below 40°C and at standard pressure, it may be absorbed onto an inorganic carrier, such as silica, wollastonite, talc or titania to form a solid. Examples of inorganic pigments include titanium dioxide white, red and yellow iron oxides, leafing and non-leafing aluminum flake, colored mica powders, mica coated with titania and/or iron (III) oxide, mixed metal oxides, copper powders, tin powders, and stainless steel powders, scarlet chrome, chrome yellow, feldspar, finely-divided ferromagnetic materials, and carbon black. Examples of suitable organic pigments include vat dye pigments, lakes of acid, basic and mordant dyestuffs, aromatic or black oil-soluble dyes, and dispersion dyes, that are white, red, yellow, blue, or green; for example, phthalocyanine, azo, poly-condensation azo pigments, azomethineazo pigments, azomethine pigments, anthraquinone, perinone pigments, perylene pigments, indigo/thioindigo pigments, dioxazine pigments, quinacridone pigments, isoindolinone pigments and aniline black pigments, isodibenzanthrone, triphendioxane, diketopyrrolopyrrole, and cyan pigments. Specific coloring agents include C.I. Pigment Blue 15:3, C.I. Pigment Blue 16, and phthalimidomethyl-substituted copper, phthalocyanine blue; magenta pigments such as C.I. Pigment Red 122; yellow pigments such as C.I. Pigment Yellow 93, 94, 128, 166, 167, 138, 185, and disanthraquinonyl-monophenylamino-s-triazine; and black pigments such as C.I. Pigment Black 7, 6. These coloring agents can be used either singly or in combination.

Prior to milling, suitable inorganic coloring agents have raw material particle sizes ranging from 0.1 to 60 µm, usually less than 30 µm. Such coloring agents may be used in the amount of 0.1 or more wt. %, based on the total weight of the raw mix, or 1 wt. % or more, or 5 wt. % or more, or 10 wt. % or more, or 20% or more, and up to a total amount of 60 wt. % or less, preferably 50 wt. % or less, or, more preferably 40 wt. % or less. Coloring agents may be used in some applications.

Prior to milling, suitable organic coloring agents which are liquid are absorbed on inorganic carriers having an average particle size of less than 20 µm, usually less than 10 µm. Solid organic coloring agents generally have an average particle size of less than 20 µm. Such coloring agents may be used in the amount of 0.01 or more wt. %, based on the total weight of the raw mix, or 0.1 wt. % or more, or 0.2 wt. % or more, or 0.5 wt. % or more, and up to a total amount of 20 wt. % or less, preferably 10 wt. % or less, or, more preferably 5 wt. % or less. Coloring agents may be used in some applications.

For making toners, the total amount of coloring agent used, both organic and inorganic combined, should not exceed 20 wt. % of the raw mix, preferably not more than 10 wt %.

Suitable non-film-forming fillers or extenders may be chosen from wollastonite, calcium metasilicate, quartz, barytes, calcium carbonate, talc, mica, stainless steel conductive whiskers; aramid, nylon, glass or acrylonitrile fibers; zinc, for corrosion resistance; sand, metal carbides, bauxite and other abrasive materials, and basic fillers such as metal phosphates and borates, e.g. dicalcium phosphate dihydrate. Non-film forming fillers, prior to milling, range in average particle size from 1 to 35 µm. After milling, such particles may still be large enough to provide a textured finish or an abrasive feel.

The one or more non-film-forming fillers may be used in amounts of up to 75 wt.%, based on the total weight of the raw mix, or up to 50 wt. %, or up to 40 wt. %, and can be used in amounts as low as 0 wt. %, based on the total weight of the raw mix, or as low as 1 wt. %, or as low as 5 wt. %, or as low as 10 wt. %, or as low as 20 wt.%.

In a preferred embodiment, textured coating compositions comprise from 1 to 20 wt. %, based on the total weight of the raw mix, of fillers having an average particle size of from 6 to 20 µm.

Preferably, fluidizable raw mix compositions, such as those used in electrostatic spray applications, further comprise particles of one or more than one dry flow aid in the amount of 0.01 or more wt. %, based on the total weight of the raw mix, or 0.2 or more wt.% or 0.5 or more wt. %, and up to 5 wt. %, or up to 1.5 wt. %, or up to 1.0 wt. %. Dry flow aids may be chosen from fumed silica, alumina, aluminum hydroxide, fumed magnesium oxide, magnesium hydroxide, silica coated titanium dioxide, other metal oxides, and mixtures thereof.

In selecting suitable dry flow aids, those having small primary particle sizes or high specific surface areas should be used with (co)polymer or resin particles having smaller average particle sizes. For dry flow aids, low specific surface areas may range as low as150 g/m² and high specific surface areas may range as high as 325 g/m².

Particularly preferred dry flow aids comprise toner grade dry flow aids, for example, hydrophobic fumed silicas treated with hexamethyldisilazane, dimethyl silane, polydimethylsiloxane or octamethylcyclotetrasiloxane and having a specific surface area of from 150 to 300 m²/g. Other preferred dry flow aids that may be used for raw mixes having average particle sizes above 10 µm, and for encapsulated or agglomerated raw mixes include Aluminum Oxide C, available from Degussa Corp (Parsippany, NJ).

As an alternative to dry flow aids, fluidizable raw mix compositions may comprise particles of one or more charge control agent dispersed into the raw mix in the amount of 0.01 wt. % or more, based on the total weight of the raw mix, or 0.5 wt. % or more and up to 10 wt. %, or up to 5 wt. %. Illustrative negative charge control agents can include metal complex salts such as the chromium, aluminum and zinc complex salts of salicylic acid and its derivatives, and azo complex salt dyes, while illustrative positive charge control agents can include nigrosine, tertiary amino compounds, and quaternary amino compounds.

Alternatively, the raw mixes of unassociated particles may be fluidized or applied electrostatically without dry flow aids or charge control agents. Fluidizing equipment, such as sonic mixers and fluidized beds or fluid bed hoppers equipped with membranes having particle sizes of from 1 to 20 µm, located directly upstream of the applicator device, may be used to fluidize the raw mix powders so that an electrostatic liquid spray devices, e.g. an ITW Ransberg No. 2 gun, or electrostatic powder spray devices may be used to apply the powder. Further, a raw mix may uniformly coat the substrate if applied with an electrostatic powder spray device in a deionized atmosphere having a relative humidity of 20% or below.

Other additives suitable for use in the raw mix may comprise particles of gloss reduction additives, such as waxes, like carnauba or polyethylene wax, and texturing agents like polytetrafluoroethylene (PTFE) and cellulose acetate butyrate (CAB) in the amount of up to 10 wt.%, based on the total weight of the raw mix, or up to 5 wt. %; matting agents, such as alkyl (meth)acrylate copolymers having carboxyl functions in the amount of up to 25 wt.%, based on the total weight of the raw mix, or up to 15 wt. %, or up to 10 wt. %; friction reducing additives, including PTFE or nylon beads; silver metal or microbicides in the amount of from 0.0001 to 0.5 wt. %, based on the total weight of the raw mix; antioxidants, such as hindered phenols, light stabilizers such as hindered amines and optical brighteners in amounts from 0.1 to 1.5 wt. %, based on the total weight of the raw mix; degassing aids, such as benzoin, in the amount of from 0.1 to 1.5 wt.%, based on the total weight of the raw mix; UV, cationic and thermal initiators; non-hydrolyzable siloxanes resin leveling agents, such as polydimethylsiloxane in solid form, in silicone resin compositions in the amount of from 0.1 to 2.0 wt.%, redox catalysts; and wrinkle finish forming catalysts. To create a solid for the raw mix, any additive that is in liquid form may be adsorbed onto one or more submicron sized carriers such as fumed silica, wollastonite, diatomaceous earth or talc to form powder particles for use in the raw mix.

Suitable free-radical curing agents include, for example, peroxides, diacylperoxides, and transition metal compounds based on fatty acids, oils, for example cobalt soaps, such as cobalt neodecanoate. Effective quantities of peroxide catalysts may be from 0.01 to 10 wt. %, based on the total weight of the raw mix, for example 0.1 to 6 wt. %, or 0.5 wt. % to 4.0 wt. %. Effective quantities of metal catalyst may be from 0.01 to 2 wt. %, based on the total weight of the raw mix, for example from 0.05 to 1.0 wt. %. Suitable UV initiators may include, for example, alpha cleavage photoinitiators, hydrogen abstraction photoinitiators, and the like. Effective quantities of UV initiators may range from 0.05 to 5 wt. %, based on the total weight of the raw mix, for example from 0.1 to 4 wt. %, or from 0.5 to 2 wt. %.

Examples of suitable cationic initiators include ethyl triphenyl phosphonium bromide (ETPPB) and benzyl-4-hydroxyphenyl methylsulfonium hexafluorophosphate. Examples of condensation catalysts include metal carboxylates, such as zinc salts, such as zinc stearate, zinc acetylacetonate and zinc neododecanoate for silicone resins; and tin salts for polyesters.

Suitable wrinkle finish forming catalysts include cyclamic acid or cyclohexylsulfamic acid, amine salts of organic acids, wherein the organic acids may include trifluoromethane sulfonic acid, also known as triflic acid, paratoluene sulfonic acid, dodecyl benzene sulfonic acid, dodecyl naphthyl sulfonic acid, and dodecyl naphthyl disulfonic acid, stannous methane sulfonate, and amine salts of inorganic acids, such as phosphonic acids. Catalysts can be used in the amount of up to 1.0 wt. %, or up to 0.6 wt. %, based on the total weight of the raw mix.

Methods for making the raw mix consist essentially of providing the desired amount of one or more resins or (co)polymers, then, if more than one raw material is used, combining all of the raw materials in bulk solid form, i.e. as chips, prills, pellets, powders or granules, and milling them together to a desired particle size. The methods eliminate extrusion, solution or dispersion processing/spray drying, and other conventional intimate mixing steps, and the following cooling steps. Further, the methods avoid the use of capitally intensive equipment for extrusion, supercritical fluid processing or dispersion/solution and spray drying.

Providing a desired amount of one or more resin or (co)polymer consists essentially of weighing out that amount of the resin or (co)polymer that corresponds to the final batch size of the milled powder composition.

Combining two or more raw materials in bulk solid form may comprise weighing and pre-mixing all individual raw materials by hand, or it may comprise the automated feed/metering or weighing of each individual raw material, e.g. through feed hoppers or fluidized beds having controlled valve or electronic feeds. Any hopper or bed feed may be gravity fed raw materials from above, i.e. stored in drums kept above the feed means. Controlled valves and electronic feeds can be actuated by hydraulic or electronic switches. Further, the amount fed and the rate of any feed can be controlled via electronic feedback loops, e.g. neural loop, controls. Preferably, the identity of all coating composition formulations are recorded and stored in an electronic database so that the formulation information from the database can be entered into an automated feed/metering or weighing apparatus which will automatically combine all of the needed raw materials. More preferably, the automated feed/metering or weighing apparatus records the amounts of each raw material used for inventory control and future management of inventory.

Once the raw materials have been provided and, if necessary, combined in a desired proportion, they are milled to a desired particle size. For milling, the size or shape of the raw material infeed for milling need not be tightly controlled and may be, e.g. as large as 4 cm in a single average particle dimension. For example, jet mills may include in-line offset breaker bars or screws to crush the feed to a uniform size as it is introduced in to the mill.

Suitable milling equipment may include jet mills, fluidized bed jet mills, impact mills and attrition mills; air classifying (ACM) mills; ball mills or roller mills; bead or media mills; centrifugal mills; cone mills; disc mills; hammer mills; and pin mills.

The preferred mill is a jet mill. More preferably, the one or more mills comprise fluid energy mills or fluidized bed jet mills in which the feed is held inside the mill by a classifying wheel until the desired average particle size is reached and then the milled particles are ejected into a collector. In operation, the particles at or below the desired average particle size limit, which may be set to a level, e.g. 7 µm, are entrained in an air stream feeding the mill and pass into a separate collecting vessel. Because fluidized bed jet mills "self-fractionate" their output, the size distribution of the milled powder is narrow. Rapid expansion of compressed gas during jet milling more than compensates for the frictional heating of the powder during milling. Accordingly, fluidized bed jet milling keeps powder compositions cool during milling, no heat history is introduced, thereby prolong storage stability of the raw mix. In addition, other more heat-sensitive materials may be used to formulate coatings produced by jet milling raw mix. Jet mills are rated in terms of output, which will vary from formulation to formulation based on factors such as the size of the raw material feed or infeed, chemistry and particle hardness. Jet mills are rated for output and can mill from 2 Kg/hr) to 270 kg/hr of a raw mix. Outputs may vary depending on the hardness and melting point of the materials being milled. Thus, outputs for tgic cured polyester resin formulations may range slightly lower than outputs for β-hydroxyalkylamide cured polyester formulations.

The use of other mills varies depending on the mill. In general, the longer a raw material is ground, the lower the average particle size of the milled product. In an ACM mill, to isolate a sub 10 µm product, the mill input is slowed and the output is continually recycled until it meets the size required. In-line cyclone classifiers may then remove powder in the desired size range. For other operations, such as ball mills, the final powder must be separated from the ceramic balls via, for example by sieving, followed by air classification methods, where milling proceeds until the particles are fine enough to be carried away by a metered air stream or are separated by a classifying wheel interposed in the metered air stream.

The milling method accomplishes intimate mixing and eliminates the attendant need to get the ingredient mixture just right before processing. If the incorrect amount of any one or more than one raw material is used, the formulation can be readjusted in process, i.e. during or after milling, and the raw mix product can simply be mixed in a mixer to evenly distribute all ingredients. So long as the total amounts of each raw material added meet the specified formulation, the final raw mix product when homogeneously mixed will meet the specified formulation. Further, because there is little or no waste involved, the batch size of any powder composition can be tightly controlled and can be tailored to meet a specific request, making just the needed amount of powder.

Improved fluidity in the raw mix can be achieved by encapsulating the raw mix composition in dry form in a film-forming resin or polymer encapsulant. Encapsulated raw mixes may readily be fluidized without using additives, such as dry flow aids or charge controlling agents. The surface of the encapsulated raw mix determines its compatibility and handling properties. Accordingly, encapsulating (co)polymers should be selected for their storage stability prior to application. Further, they should be selected to give within the cured coating, film or print a desired level of durability, weatherability, or (in)compatibility with the (co)polymer or resin in the raw mix, or any combination thereof. They may also be selected for their tendency to develop, hold or dissipate an electrostatic charge. The average particle size of the encapsulated raw mix should be 15 µm or more, or 20 µm or more, or 30 µm or more to ensure air fluidizability, and can range as high as conventional coating powder particles, or up to 75 µm, or up to 60 µm, or up to 50 µm.

Suitable encapsulating polymers may include any resin compatible with at least one (co)polymer or resin in the raw mix having a T_{g} of greater than 40 °C, preferably greater than 50°C, and a T_{g} less than that of the (co)polymer or resin in the raw mix which has the lowest T_{g}, preferably at least 10°C less, and, further, which can be softened or dissolved in either a heated aqueous dispersion or aqueous solvent mixture or in a partial vacuum (<200 mm/Hg). Examples of such polymers include alkyl(meth)acrylate copolymers, GMA resins, glycidyl ethers of (oligo)bisphenol, polyethylene oxide-polypropylene oxide (PEO-PPO) block copolymers, thermoplastic or linear polyesters, polyolefins, such as low density polyethylene and PVDF. Examples of (co)polymers that can develop, hold or dissipate an electrostatic charge include polyethylene, polypropylene and silicone resins as negative end dielectrics, and PEO (co)polymers, PEO-PPO, polyurethane, and epoxy resins as positive end dielectrics. Such (co) polymers can enhance the attraction of encapsulated powder to the substrate.

The amount of encapsulating polymers should range up to 15 wt. %, based on the total weight of the raw mix, or up to 10 wt. %, or, preferably, up to 5 wt. %, and should be used in amounts sufficient to fully encapsulate the raw mix, for example, 0.1 wt. % or more, based on the total weight of the raw mix, 1 wt. % or more, or 3 wt. % or more. The percent solids of the solution or dispersion of the encapsulating polymer in the aqueous dispersion or aqueous solvent mixture used to encapsulate raw mix should range from to 0.5 wt.% to 80 wt.% to permit easy encapsulation while enabling rapid drying.

Raw mix encapsulation consists essentially of forming temporary granules of the raw mix by slowly adding thereto water, or another volatile non-solvent for the raw mix, such as alkyl esters, e.g. ethyl acetate, or mixtures thereof, followed by mixing the thus formed temporary granules with one or more encapsulant dissolved in solution or melted in an aqueous dispersion to coat the temporary granules and drying to form encapsulated raw mix.

In forming temporary granules, addition of non-solvent to raw mix may be accomplished, for example, by spraying it as an atomized mist onto the raw mix during mixing. Preferably, temporary granulation uses as little non-solvent as is possible, for example, from 0.1 to 3.0 wt. %, based on the total weight of the raw mix, or from 0.1 to 1.0 wt. %. Useful mixers comprise low or medium intensity mixers, such as the Lodige Ploughshare' or 'Winkworth RT' mixer, and the 'Spectrum' sold by T. K. Fielder and Co. Ltd. Average particle sizes of the temporary granules can be controlled by increasing mixing speed to decrease particle size, and decreasing mixing speed to increase particle size.

The temporary granules are encapsulated without heating either in the low intensity mixer in which they are temporarily granulated, or they are supplied into a ribbon blender, fluid bed dryer, or flash dryer. During mixing or fluidizing, the temporary granules are misted or sprayed with the solution or melt dispersion of one or more encapsulant in the smallest amount needed to encapsulate them. As in with temporary granulation, the average particle sizes of the encapsulated raw mix can be controlled by increasing mixing speed to decrease particle size, and decreasing mixing speed to increase particle size. The thus formed capsules are dried, for example in a fluid bed dryer or flash dryer, or via vacuum extraction to remove all water, non-solvent and any solvent for the encapsulant therefrom. The resultant product behaves like particles of the encapsulant material, e.g. like acrylic resin particles.

Raw mixes may be used in dry form as toners, coating powders and film-forming and molding powders, or they may be slurried in water, optionally with from 0.01 to 1 wt. %, based on the weight of a non-ionic surfactant, such as polyoxyethylene alkyl ether, polyoxyethylene alkyl phenol ether. The dispersion may also contain anionic and cationic soaps, protective colloids, thickeners and auxiliaries to add stability. Preferably these stabilizers contain one or more reactive group(s) which are compatible with the powder cure chemistry so that they may be become chemically bound in the crosslinked film. The stable dispersion may optionally be treated by ball milling or other similar techniques common to the liquid paint industry, to reduce the particle size further. Depending upon the stabilizers used neutralization, typically with alkanolamines or some other nitrogen base, may be used to aid in dispersion. Slurried powders should comprise solids in the amount of from 30 to 70 wt. %, based on the total weight of the slurry, but may be diluted for sprayability.

As an alternative to encapsulation, raw mixes can be agglomerated in low or medium intensity mixers in the same way they are temporarily granulated, except that solvents or aqueous dispersions of polymer or resin granulating agents are misted or sprayed onto the raw mixes during mixing. Agglomerates of raw mix particles may readily be fluidized without using additives, such as dry flow aids or charge controlling agents. Suitable agglomerating agents may comprise, for thermosetting polyester or acrylic-based powder, water-borne acrylic (co)polymers, polyester resin emulsions, or vinyl or acrylic polymer latex; for epoxy-based powder water-based epoxy resin; for polyester, acrylic or epoxy resins, water-soluble cellulose ethers, acrylic resin emulsions, urethane resin emulsions, polyethylene glycols, celluloses, polyvinyl alcohols, polyethylene oxide waxes, and acrylic resin-silicone resin emulsions; for silicone resins, colloidal silicas; for polyurethanes, urethane resin emulsions; and, for hydrocarbons, paraffin waxes. Alternatively, a chemically-harmless solvent for the binder may be used as agglomerating agent, for example methanol and other alkanols, lower alkyl ketones, or ethers, such as alkyl ethers, e.g. dimethyl ether, methyl Cellosolve, ethyl Cellosolve or butyl Cellosolve. Vacuum extraction can be used to aid removal of the solvent after agglomeration.

Other methods of agglomerating the raw mix to the indicated average particle size include methods chosen from heating the raw mix with agitation to a temperature at which at least one solid in the raw mix melts at the particle surfaces but does not melt in the particle interiors, usually from 40 to 80°C, for from 50 seconds to 20 hours, followed by cooling with stirring to form a solid agglomerate; mixing the raw mix in aqueous surfactant solution, e.g. polyoxyethylene alkyl ether, polyoxyethylene alkyl phenol ether, or other nonionic, or anionic or cationic surfactants, with stirring to form a slurry, heating the slurry at a temperature at which the starting composition melts at the particle surfaces but does not melt in the particle interiors, and drying the resulting agglomerates under reduced pressure with stirring; and adding a liquid photocurable composition, e.g. acrylic prepolymer and a photoinitiator in solution, dropwise to the starting powder coating composition with agitation, curing the photocurable composition by light irradiation, and drying the resulting agglomerates under reduced pressure with stirring. More mechanically aggressive means of agglomerating raw mixes may be used, including fusion agglomeration via mechanical force to bind the particles through a process involving deformation and microwelding of the plastic material using an ang mill.

The raw mixes and their encapsulated forms and agglomerates may be coated on a substrate by application, followed by heating the substrate to flow out the powder to form a cohesive layer and curing by heat or irradiation, e.g. UV light. If a slurry is used, a drying step may precede curing. Applicator devices may include electrostatic spray guns, fluidized beds, magnetic brushes, and may also include slurry and liquid spray devices, such as electrostatic spray guns and electrostatic bells, such as handheld guns equipped with an electrostatic bell, i.e. an ITW Ransberg No. 2 gun. Powder spray applicators may optionally be equipped with one or more fluid bed hoppers, fluidized beds, ultrasonic mixers or sonic mixers to fluidize the raw mix feed for spray. In addition, raw mixes that are ground to a 10 µm average particle size, or less, may be applied as powders using slurry and liquid spray devices because the raw mixes behave as a fluid in air. Preferably, such fine raw mix powders are fluidized in a fluidized bed or sonic mixer upstream of the liquid spray device.

Preferably, any electrostatic powder spray gun may be equipped with one or more ultrasonic mixer or sonic mixer powder feeder to fluidize the raw mix immediately prior to its application to a substrate. Any raw mix of any average particle size can be air fluidized using a sonic mixer or ultrasonic mixer to feed powder to an electrostatic spray gun. For example, fine raw mix powders, <10µm average particle size, may be expanded and placed in a fluidized state by a sonic mixer, pumped and electrostatically sprayed by conventional guns.

For powder coating flow out, the coating powder layer or the substrate surface should be heated to from 70 to 120°C to flow out of the powder layer. Curing can be effected either thermally, such as with convection ovens or IR lamps or via irradiation, such as with UV light or e-beams. Curing time, temperature and other conditions for the raw mixes, or their encapsulated or agglomerated forms, should equal those used in the cure of extruded compositions, e.g. conventional coating powders made from the same starting materials as the raw material in the raw mix.

The small particle sizes of the raw mixes, whether or not they are encapsulated, enable the formation of very thin films and coatings having a thickness of from 12.7 µm to 101.2 µm, preferably 25.4 µm to 50.8 µm.

Substrates for coating may include steel, such as steel coils, motor parts, rotors, stators and electrical generator parts, ovens, stoves and grills; iron and other metal substrates, such as outdoor furniture; concrete, ceramic, and tile, glass, and heat sensitive substrates, such as natural wood, plywood, medium density fiberboard (MDF), paper, cardboard, plastic and non-ferrous metals, such as brass and bronze. When used as powder coatings on these substrates, the raw mixes may provide primers, stains, tints, basecoats, colorcoats, clearcoats, heat resistant coatings, electrically insulative coatings, corrosion resistant coats, slip resistant coats, lubricious coatings, weatherable and architectural coatings, intumescent coatings and decorative coatings.

### EXAMPLE

In the following examples, MEK solvent resistance was measured via the MPTM 0020 method A. In this method, the cured coated panel, when cooled to STP, is rubbed 50 times with a cotton-tip swab saturated in methyl ethyl ketone (MEK), in approximately 2.54 cm long strokes in a back and forth motion (double rubs); while maintaining moderate pressure throughout the rubs. The swab remains soaked with MEK throughout the 50 double rubs. Moderate pressure refers to applying pressure so that, while rubbing a cured coated panel placed on a scale, the scale will read 4 to 5 pounds (1.814 to 2.25 Kg) not counting the weight of the panel or anything else aside from the pressure applied by the swab. A score of "5" is excellent, "4" is very good, "3" is good, "2" is fair, and "1" is poor.

Impact resistance was measured using a modified ASTM D-2794 (9/1996) method, wherein a coated cured panel is allowed to cool and is tested using a Gardner Impact Test Model 1120 impact tester equipped with a stainless steel die of 0.64 in. (16.24 mm) in diameter, a 5/8 in. (15.86 mm) diameter indenter centered in the die, a 4 pound (1.814 Kg) impacting weight, and a film thickness gauge, fully calibrated and adjusted in accordance with manufacturer's instructions. The impact tester and coated cured panel are each placed flat on a 1.5 in. (38.07 mm) thick block of hardwood test support. Direct impact is measured with the panel placed coated side up. Results are measured by visual inspection, recording the maximum force impact which the coating withstands.

A raw material mixture, shown in Table 1, was premixed by shaking all ingredients in a plastic bag. Then the sample was ground on a Hosakawa AFG 100 fluidized bed opposed jet mill using a 1.9 mm nozzle, grinding air of 90 psi (620.5 Kilo pascals) and a classifier wheel running at 10,000 rpm's. The powder thus produced was characterized by a D97 of 12.8 µm and a d(0.5) of 6.5-6.8 µm, as determined with a Coulter LS device (Beckman Coulter Inc., Fullerton, CA) used in the dry feed mode, and following manufacturer's operating instructions. The resulting powder was electrostatically sprayed on to a 0.032in. (813 µm) thick cold rolled steel panel with a Nordson AFC II electrostatic spray gun. The panel was baked in a 190.55°C (375°F) convection oven for 15 minutes. The coated panel exhibited resistance to 50 methyl ethyl ketone double rubs, scoring a very good rating of 4+, and, further, exhibited 140 inch pounds (1.6 Kg-m) of direct impact resistance without failure. Coating thickness was 19.05 µm (0.75 mil).

**TABLE 1**

| **Description** | **Phr (weight parts per hundred resin)¹** |
|---|---|
| Solid, saturated polyester resin Acid value = 30-35 mg KOH/g resin Viscosity = 30-45 poise | 93.0 |
| Acrylic oligomer melt flow aid | 2.0 |
| Degassing agent | 1.0 |
| Phthalocyanine green | 0.007 |
| Triglycidyl isocyanurate (TGIC) | 7.0 |
| Barium sulfate | 5.0 |
| Titanium dioxide | 6.224 |
| Mixed metal oxide buff rutile yellow | 5.566 |
| Isoindolinone yellow | 6.592 |

| | |
|---|---|
| 1. 93 weight parts of polyester resin and 7 weight parts of TGIC equal 100 weight parts resin. | |

## Claims

1. An encapsulated raw mix powder composition comprising an encapsulated mixture of ingredients as unassociated discrete particles, the ingredients comprising
particles each consisting of solids of one or more than one (co)polymer or resin, and
particles of one or more than one solid additive chosen from melt flow aids, coloring agents, dry flow aids, fillers and mixtures thereof,
wherein the raw mix is encapsulated in one or more film-forming resin or polymer encapsulate.

2. A powder composition as claimed in claim 1, wherein the said powder composition further comprises separate and discrete particles chosen from one or more solid curing agents for the said (co)polymer or resin.

3. A powder composition as claimed in claim 2, wherein the said average particle size of the primary particles of said powder composition ranges from 1 to 15 µm in diameter.

4. An encapsulated raw mix powder composition as claimed in claim 1, wherein the average particle size of the said encapsulated raw mix composition ranges from 15 to 100 µm in diameter.

5. A method for making an encapsulated raw mix powder composition comprising an encapsulated mixture of ingredients as unassociated discrete particles, said method consisting essentially of providing one or more than one solid consisting of a solid film-forming (co)polymer or resin,
optionally, combining the said solid film-forming (co)polymer or resin with one or more solid additives chosen from one or more melt flow aids, one or more non-film forming coloring agents, one or more non-film forming fillers, one or more charge control agents, one or more dry flow aids and mixtures thereof,
milling the said solids to form a raw mix powder composition, wherein the average particle size of the particles of the said powder composition ranges from 1 to 25 µm in diameter,
encapsulating said raw mix powder composition by forming temporary granules by mixing the said raw mix powder composition with one or more volatile non-solvent, mixing the said temporary granules into one or more fluid film-forming resin or polymer encapsulate, and drying to form said encapsulated raw mix powder composition and to remove said volatile non-solvent.

6. A method for making an encapsulated raw mix powder composition as claimed in claim 5,
wherein the said milling comprises jet milling.

7. In a method for making a powder coating on a substrate which comprises applying one or more powder composition to the said substrate to form a powder layer on the said substrate, heating the said powder layer to flow out the said powder composition to form a cohesive layer, and curing the cohesive layer by continued heating or by irradiating the said cohesive layer to form a coating, wherein the improvement comprises
selecting as the said powder composition, the composition as claimed in claim 1.

## Patentansprüche

1. Eingeschlossene bzw. eingekapselte Rohgemischpulverzusammensetzung, umfassend ein eingeschlossenes Gemisch von Inhaltsstoffen als nichtassoziierte, diskrete Teilchen, wobei die Inhaltsstoffe Teilchen umfassen, die jeweils aus Feststoffen von einem oder mehr als einem (Co)polymer oder Harz und Teilchen von einem oder mehr als einem Feststoffadditiv, ausgewählt aus Schmelzflusshilfsmitteln, Färbemitteln, Trockenflusshilfsmitteln, Füllmitteln und Gemischen davon, bestehen,
wobei das Rohgemisch in ein oder mehrere Film-bildende Harz- oder Polymereinschlüsse eingeschlossen ist.

2. Pulverzusammensetzung nach Anspruch 1, wobei die Pulverzusammensetzung weiter separate und diskrete Teilchen, ausgewählt aus einem oder mehreren festen Vernetzungsmitteln für das (Co)polymer oder Harz, umfasst.

3. Pulverzusammensetzung nach Anspruch 2, wobei die mittlere Teilchengröße der Primärteilchen der Pulverzusammensetzung im Bereich von 1 bis 15 µm im Durchmesser liegt.

4. Eingeschlossene Rohgemischpulverzusammensetzung nach Anspruch 1, wobei die mittlere Teilchengröße der eingeschlossenen Rohgemischzusammensetzung im Bereich von 15 bis 100 µm im Durchmesser liegt.

5. Verfahren zur Herstellung einer eingeschlossenen Rohgemischpulverzusammensetzung, umfassend ein eingeschlossenes Gemisch von Inhaltsstoffen als nicht-assozüerte, diskrete Teilchen, wobei das Verfahren im Wesentlichen aus dem Bereitstellen eines oder mehr als eines Feststoffes, bestehend aus einem (Co)polymer oder Harz, welches einen festen Film bildet,
gegebenenfalls dem Vereinigen des (Co)polymers oder Harzes, welches einen festen Film bildet, mit einem oder mehreren festen Additiven, ausgewählt aus einem oder mehreren Schmelzflusshilfsmitteln, einem oder mehreren nicht-Film-bildenden Färbemitteln, einem oder mehreren nicht-Film-bildenden Füllmitteln, einem oder mehreren Ladungskontrollmitteln, einem oder mehreren Trockenflusshilfsmitteln und Gemischen davon,
dem Mahlen der Feststoffe, um eine Rohgemischpulverzusammensetzung zu bilden, wobei die mittlere Teilchengröße der Teilchen der Pulverzusammensetzung im Bereich von 1 bis 25 µm im Durchmesser liegt,
dem Einschließen der Rohgemischpulverzusammensetzung durch Bilden temporärer Körner durch Mischen der Rohgemischpulverzusammensetzung mit einem oder mehreren flüchtigen Nicht-Lösungsmitteln, Mischen der temporären Körner in ein oder mehrere Fluidfilm-bildende Harz- oder Polymereinschlüsse, und Trocknen, um die eingeschlossene Rohgemischpulverzusammensetzung zu bilden und um das flüchtige Nicht-Lösungsmittel zu entfernen, besteht.

6. Verfahren zum Herstellen einer eingeschlossenen Rohgemischpulverzusammensetzung nach Anspruch 5, wobei das Mahlen Strahlmahlen umfasst.

7. In einem Verfahren zum Herstellen einer Pulverbeschichtung auf einem Substrat, welches das Aufbringen einer oder mehrerer Pulverzusammensetzungen auf das Substrat, um eine Pulverschicht auf dem Substrat zu bilden, das Erwärmen der Pulverschicht, damit die Pulverzusammensetzung verläuft, um eine kohäsive Schicht zu bilden, und das Härten der kohäsiven Schicht durch kontinuierliches Erwärmen oder durch Bestrahlung der kohäsiven Schicht, um eine Beschichtung zu bilden, umfasst,
wobei die Verbesserung das Auswählen der Zusammensetzung nach Anspruch 1 als die Pulverzusammensetzung umfasst.

## Revendications

1. Composition de poudre de mélange brut encapsulée comprenant un mélange encapsulé d'ingrédients dans la forme de particules discrètes non associées, les ingrédients comprenant des particules constituées chacune de matières solides d'un ou de plus d'un co(polymère) ou résine, et des particules d'un ou plus d'un additif solide choisi parmi des auxiliaires d'écoulement à l'état de fusion, des agents colorants, des auxiliaires d'écoulement à l'état sec, des charges et des mélanges de ceux-ci,
dans laquelle le mélange brut est encapsulé dans un ou plusieurs encapsulats de résine ou de polymère formant un film.

2. Composition de poudre selon la revendication 1, dans laquelle ladite composition de poudre comprend de plus des particules séparées et discrètes choisies parmi un ou plusieurs agents durcissants solides pour ledit co(polymère) ou ladite résine.

3. Composition de poudre selon la revendication 2, dans laquelle ladite taille moyenne de particules des particules primaires de ladite composition de poudre est comprise entre 1 et 15 µm en diamètre.

4. Composition de poudre de mélange brut encapsulée selon la revendication 1, dans laquelle la taille moyenne de particules de ladite composition de mélange brut encapsulée a un diamètre de 15 à 100 µm.

5. Procédé pour la fabrication d'une composition de poudre de mélange brut encapsulée comprenant un mélange encapsulé d'ingrédients dans la forme de particules discrètes non associées, ledit procédé consistant
essentiellement à fournir une ou plus d'une matière solide constituée d'un co(polymère) ou d'une résine formant un film,
facultativement à combiner ledit co(polymère) ou ladite résine formant un film solide avec un ou plusieurs additifs solides choisis parmi un ou plusieurs auxiliaires d'écoulement à l'état de fusion, un ou plusieurs agents colorants ne formant pas un film, une ou plusieurs charges ne formant pas un film, un ou plusieurs agents de contrôle de charge, un ou plusieurs auxiliaires d'écoulement à l'état sec et des mélanges de ceux-ci,
à broyer lesdites matières solides pour former une composition de poudre de mélange brut, dans lequel la taille moyenne de particules des particules de ladite composition de poudre présente un diamètre de 1 à 25 µm,
à encapsuler ladite composition de poudre de mélange brut en formant temporairement des granulés par mélange de ladite composition de poudre de mélange brut avec un ou plusieurs non-solvants volatils, en mélangeant lesdits granulés temporaires dans un ou plusieurs encapsulats de résine ou de polymère formant un film fluide, et en séchant pour former ladite composition de poudre de mélange brut encapsulée et éliminer ledit non-solvant volatil.

6. Procédé pour la fabrication d'une composition de poudre de mélange brut encapsulée selon la revendication 5, dans lequel ledit broyage comprend un broyage à jet.

7. Procédé pour la fabrication d'un revêtement de poudre sur un substrat qui comprend l'application d'une ou plusieurs compositions de poudre sur ledit substrat pour former une couche de poudre sur ledit substrat, le chauffage de ladite couche de poudre pour faire s'écouler ladite composition de poudre pour former une couche cohésive, et le durcissement de la couche cohésive par chauffage continu ou par irradiation de ladite couche cohésive pour former un revêtement, dans lequel l'amélioration comprend le choix pour ladite composition de poudre de la composition comme revendiquée dans la revendication 1.
